Europäisches Patentamt

European Patent Office

Office européen des brevets

(11) Veröffentlichungsnummer: **0 305 875**
**A2**

(12) **EUROPÄISCHE PATENTANMELDUNG**

(21) Anmeldenummer: **88113770.7**

(22) Anmeldetag: **24.08.88**

(51) Int. Cl.⁴: **G01N 30/08 , G01N 1/28**

(30) Priorität: **03.09.87 DE 3729374**

(43) Veröffentlichungstag der Anmeldung:
**08.03.89 Patentblatt 89/10**

(84) Benannte Vertragsstaaten:
**AT BE CH FR GB LI NL**

(71) Anmelder: **Kernforschungsanlage Jülich**
**Gesellschaft mit beschränkter Haftung**
**Postfach 1913**
**D-5170 Jülich 1(DE)**

(72) Erfinder: **Pilwat, Günter, Dr.**
**Hoffeld 23**
**D-5162 Niederzier(DE)**
Erfinder: **Rudolph, Jochen, Dr.**
**Amselweg 9**
**D-5165 Hürtgenwald(DE)**

(54) **Vorrichtung und Einrichtung zur kryogenen Anreicherung von in Gasen enthaltenen Spurenstoffen.**

(57) Die Erfindung bezieht sich auf eine Vorrichtung zur Anreicherung von in Gasen (beispielsweise Luftproben) enthaltenen Spurenstoffen, bei der die Gase durch ein U-förmiges, in der Regel ein Adsorbens enthaltendes Rohr, das in ein Kühlmittel eingetaucht ist, geleitet werden. Gemäß der Erfindung ist der für die Aufnahme des Adsorbens bestimmte Teil des Rohres von einer taucherglockenartigen Kammer umfaßt, in die ein verschließbares Entgasungsrohr von oben hineinragt, welches oberhalb der Öffnung der Kammer mündet. Außerdem ist eine Einrichtung zur Aufheizung des das Adsorbens enthaltenden Rohres vorgesehen. Die Vorrichtung gemäß der Erfindung ermöglicht es, das Anreicherungsrohr abwechselnd zu kühlen und aufzuheizen, ohne daß es dem Kühlmittelgefäß, das beispielsweise flüssigen Stickstoff enthält, entnommen zu werden braucht.

FIG. 1

## Vorrichtung und Einrichtung zur kryogenen Anreicherung von in Gasen enthaltenen Spurenstoffen

Die Erfindung bezieht sich auf eine Vorrichtung und eine Einrichtung zur kryogenen Anreicherung von in Gasen enthaltenen Spurenstoffen, bei der ein U-förmig gebogenes, in der Regel ein Adsorbens enthaltendes Rohr vorgesehen ist, durch das das Gas hindurchgeleitet wird und das zur Anreicherung der Spurenstoffe in ein ein Kühlmittel enthaltendes Gefäß eingetaucht ist, wobei die aus dem Kühlmittelgefäß oben herausragenden Rohrenden an die das Gas führende Leitung angeschlossen sind.

Für den gaschromatischen Nachweis von Spuren von Kohlenwasserstoffen und Halogenkohlenwasserstoffen in permanenten Gasen, beispielsweise Luftproben für die Umgebungsüberwachung oder Prozeßkontrolle u. ä. ist es nötig, Probenvolumina von einem Liter und mehr einzusetzen, um die Nachweisgrenze der Detektoren für bestimmte Stoffe zu überschreiten.

Diese großen Probenmengen lassen sich aber nicht ohne weiteres direkt gaschromatographisch auftrennen, vielmehr muß man geeignete Schritte unternehmen, um das Probenvolumen auf diejenige Menge herabzusetzen, die sich problemlos in ein gaschromatisches System injizieren läßt.

Die gängigen Methoden hierfür sind die Adsorption bzw. die Kondensation der Spurenstoffe an feste Oberflächen, wie Graphit, Kohle, Silicagel, poröse Glas kugeln, organische Polymere u. a., bei entsprechend tiefen Temperaturen. Gegebenenfalls kann auch ein leeres Rohr mit geeigneter Innenoberfläche für die Anreicherung der Gase vorgesehen sein.

Mit Vorrichtung der eingangs bezeichneten Art wird dazu eine bestimmte Menge Luft durch das Anreicherungsrohr, das mit Adsorbens gefüllte Rohr, gesaugt, das zur Kühlung in ein Dewar-Gefäß, das mit flüssigem Stickstoff gefüllt ist, eintaucht. Auch ist bekannt, ein Anreicherungsrohr in einem wärmeisolierten Gefäß durch Einspritzen von flüssigem Stickstoff auf -180 bis -190 Grad Celsius zu bringen. Auch kann es Teil eines Wärmetauschersystems sein, das durch Durchleiten von flüssigem Stickstoff gekühlt wird.

Diese bekannten Verfahrensweisen haben jedoch einige Nachteile; so muß beispielsweise das Dewar-Gefäß manuell oder mechanisch gehoben und gesenkt werden, damit das Anreicherungsrohr eintauchen kann. Die Kühlung durch Direkteinspritzung von flüssigem Stickstoff ist verbrauchsintensiv, da nur die Verdampfungswärme des flüssigen Stickstoffs ausgenutzt wird.

Es ist daher Aufgabe der Erfindung, eine Vorrichtung zu schaffen, die mit geringem mechanischen Aufwand und minimalem Bedarf an flüssigem Stickstoff eine automatische Probenanreicherung über einen längeren Zeitraum hinweg ermöglicht. Das ist beispielsweise erforderlich, wenn Messungen im Feld, auf Schiffen oder automatisierten Stationen durchgeführt werden sollen. Es ist ferner Aufgabe der Erfindung, eine Einrichtung zu schaffen, in der die Vorrichtung integriert ist.

Diese der Erfindung zugrundeliegende Aufgabe wird bei einer Vorrichtung der eingangs bezeichneten Art dadurch gelöst, daß zumindest der gegebenenfalls für die Aufnahme des Adsorbens bestimmte Teil des Rohres von einer Kammer umfaßt wird, die nahe der oder an der dem Boden des Kühlmittelgefäßes zugewandten Seite eine Öffnung aufweist und in die von oben ein außerhalb des Kühlmittelgefäßes verschließbares, unten offenes Entgasungsrohr hineinragt, dessen Mündung sich oberhalb der Öffnung in vorgegebenem Abstand von dieser befindet und daß eine Einrichtung zur Aufheizung des im Kühlmittelgefäß verbleibenden, das Adsorbens enthaltenden Rohres vorgesehen ist.

Bei einer zweckmäßigen Ausgestaltung der Vorrichtung besteht die Einrichtung zur Aufheizung des Rohres darin, daß das Rohr aus einem elektrisch leitenden Material besteht und zu seiner Aufheizung an eine elektrische Spannungsquelle anschließbar ist. Alternativ kann die Einrichtung auch ein um das Anreicherungsrohr gewickelter Widerstandsdraht sein oder ein zweites Rohr aus elektrisch leitendem Material, das das Anreicherungsrohr, das in diesem Falle aus Quarz bestehen kann, umhüllt. Außerdem kann die Einrichtung aus einer Kombination aus den verschiedenen Ausführungsarten bestehen.

Die Vorrichtung gemäß der Erfindung ermöglicht es, das Anreicherungsrohr abwechselnd zu kühlen und aufzuheizen, ohne daß es dem Kühlmittelgefäß, das beispielsweise flüssigen Stickstoff enthält, entnommen zu werden braucht. Soll das Anreicherungsrohr gekühlt werden (wenn zur Anreicherung der Spurenstoffe Gas über das Rohr geleitet wird), dann bleibt das Entgasungsrohr nach außen offen, so daß der untere Raum der Kammer bis zur Mündung des Entgasungsrohres mit flüssigem Stickstoff gefüllt ist.

Nach Beendigung der Anreicherung wird Entgasungsrohr mit einem hierzu vorgesehenen Ventil geschlossen und das Anreicherungsrohr auf geheizt. Der dabei verdampfende Stickstoff verdrängt den flüssigen Stickstoff aus der Kammer, so daß das nunmehr von Gas umgebene Anreicherungsrohr bis zum Erreichen der gewünschten Endtemperatur aufgeheizt wird.

An dem das Adsorbens enthaltenden Teil des Anreicherungsrohres - das selbstverständlich auch spiralförmig ausgebildet sein kann - befindet sich zweckmäßigerweise ein Temperaturmeßfühler zur Messung von Temperaturen im Bereich von 20 bis 200°C, durch den die Temperatur des Rohres während des Aufheizungsganges überprüft werden kann.

Ist das Anreicherungsrohr nur in seinem unteren Teil mit Adsorbens gefüllt, dann kann die Kammer selbstverständlich auch so dimensioniert sein, daß sie nur diesen unteren Teil des Rohres umfaßt. Die außerhalb der Kammer, jedoch noch im Kühlmittelgefäß befindlichen Rohrteile sind dann zweckmäßigerweise mit Isoliermaterial umgeben.

Für den Fall, daß zwei oder mehr Probenanreicherungen gleichzeitig durchgeführt werden sollen, kann eine Vorrichtung mit einem Kammersystem eingesetzt werden, das aus wenigstens zwei Kammern mit jeweils einem Anreicherungsrohr, einem in die Kammer hineinragenden Entgasungsrohr und jeweiliger Temperaturmeßstelle besteht.

Die Vorrichtung gemäß der Erfindung wird vorteilhaft in eine Einrichtung integriert, bei der ein Rohrende des Anreicherungsrohres mit einer Einrichtung zur Volumenbestimmung des durch das Anreicherungsrohr geleiteten Gases und das andere Rohrende mit der das eingeleitete Gas enthaltenden Leitung und alterna tiv eines der beiden Rohrenden des Anreicherungsrohres mit einem Anschluß für ein Trägergas und das andere Rohrende mit einer Einrichtung zur Bestimmung der Spurenstoffe verbindbar sind, wobei die Verbindungsleitungen durch Ventile verschließbar sind.

Als Einrichtung zur Volumenbestimmung des Gases kann ein mit einer Vakuumpumpe in Verbindung stehender Vakuumbehälter Verwendung finden, wobei an dem Vakuumbehälter ein Vakuumanzeiger angeschlossen ist.

Die Vorrichtung gemäß der Erfindung und die Einrichtung hierzu sind in der Zeichnung schematisch dargestellt und werden im folgenden näher erläutert.

Es zeigen

Figur 1 eine Vorrichtung mit einer Kammer

Figur 2 a eine Vorrichtung mit zwei Kammern

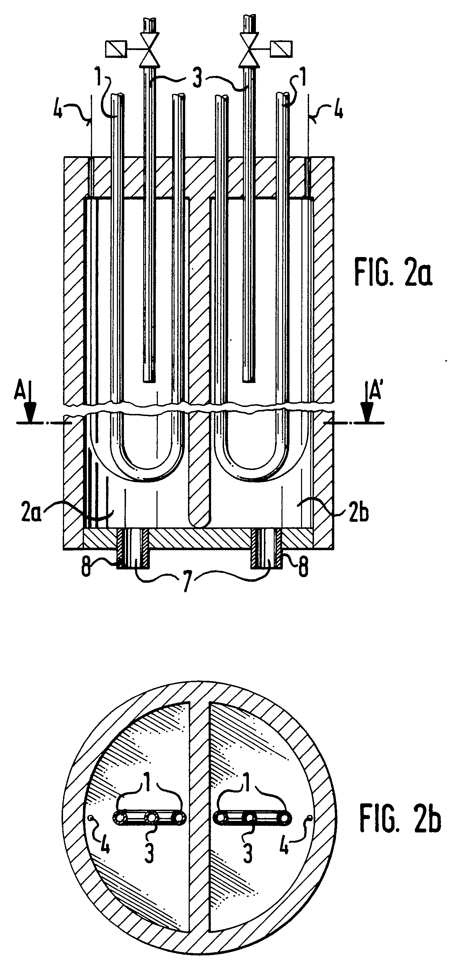

Figur 2 b einen Querschnitt durch die Vorrichtung gemäß Figur 2 a längs der Linie A - A'

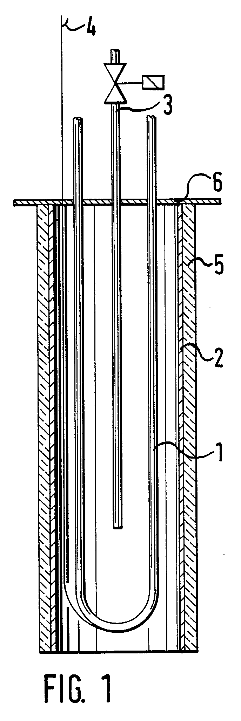

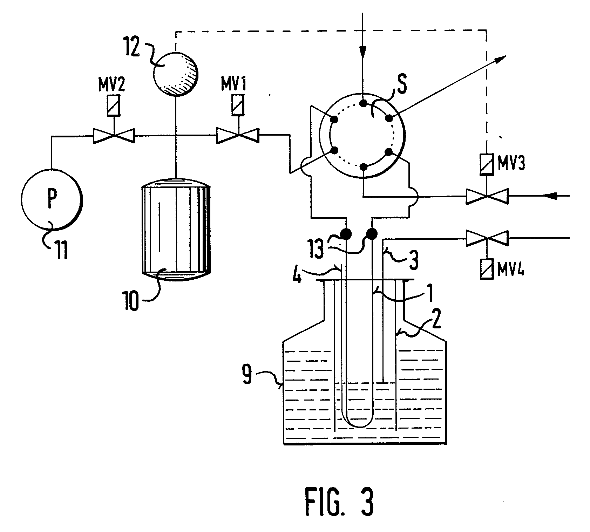

Figur 3 eine Einrichtung zur Anreicherung von Spurenstoffen mit einer Vorrichtung gemäß Figur 1

Figur 1 zeigt das U-förmig gebogen Anreicherungsrohr 1, das aus Edelstahl oder Teflon gefertigt ist, mit der das Rohr umfassenden Kammer 2, die unten offen ist. Im Anreicherungsrohr 1 befindet sich ein geeignetes Adsorbens. Das Anreicherungsrohr 1 und das Entgasungsrohr 3, das in die kammer hineinragt, sind von der Kammerwandung elektrisch isoliert nach oben geführt.

An den in der Kammer befindlichen Teil des Anreicherungsrohres 1 ist der Meßkopf eines Ni-Cr/Ni-Thermoelementes 4 aufgelötet, dessen Zuleitungen ebenfalls durch die Kammer nach oben geführt sind.

Alle Durchführungen durch die Kammer sind gas- und flüssigkeitsdicht ausgeführt.

Die Kammer 2 besteht aus Edelstahl und ist mit Isoliermaterial 5 umhüllt. Sie trägt oben einen Kragen 6 zur Auflage der Vorrichtung auf die Oberkante eines Kühlmittelgefäßes.

In den Figuren 2 a und 2 b ist eine Vorrichtung mit einem aus zwei Kammern 2 a und 2 b bestehenden Kammernsystem dargestellt. Jede Kammer ist unabhängig von der anderen Kammer mit Anreicherungsrohr 1, Entgasungsrohr 3, Temperaturmeßfühler 4 sowie einer Öffnung 7 ausgestattet. Herausragende Rohrteile 8 verhindern das Eindringen von Stickstoffgas in die Nachbarkammer.

Dieses Kammernsystem erlaubt getrennte Probenanreicherungen, wobei jede Kammer getrennt geheizt oder gekühlt werden kann. Es kann eingesetzt werden, wenn ein Teil des Effluenz zwischenkonzentriert werden muß, um auf einer weiteren chromatographischen Trennsäule untersucht zu werden.

Figur 3 zeigt eine Einrichtung mit einer Vorrichtung mit einer Kammer 2. Die Vorrichtung mit Anreicherungsrohr 1, Kammer 2, Entgasungsrohr 3 und Tempraturfühler 4 ist in ein Gefäß 9, das mit flüssigem Stickstoff gefüllt ist, eingetaucht. Das eine Rohrende des Rohres 1 ist über ein Sechs-Wege-Ventil S und über ein Magnetventil MV 1 an einen Vakuumbehälter 10 (10 1) angeschlossen, der seinerseits über ein Magnetventil MV 2 mit einer Vakuumpumpe 11 in Verbindung steht.

An das Vakuumgefäß ist ein Vakuumanzeiger 12 mit Analogausgang angeschlossen.

Das andere Rohrende des Anreicherungsrohres 1 ist über ein Magnetventil MV 3 mit der das Gas (im dargestellten Fall Luft) führenden Leitung verbunden.

Die Einrichtung ist im Zustand der Anreicherung der Spurenstoffe dargestellt, wie aus der Stellung des Sechs-Wege-Ventils S und des Stickstoff-Niveaus in der Kammer 2 zu erkennen ist.

Durch Betätigen des Sechs-Wege-Ventils S kann ein Rohrende des Rohres 1 mit einer Leitung, die Trägergas führt und das andere Ende mit einer Einrichtung zur Bestimmung der Spurenstoffe, beispielsweise einem Gaschromatographen, verbunden werden.

Das Entgasungsrohr 3 führt über das Magnetventil MV 4 zur Außenatmosphäre.

Am Anreicherungsrohr 1 sind elektrische Anschlüsse 13 mit einer - in der Zeichnung nicht dargestellten - elektrischen Spannungsquelle zur Aufheizung des Anreicherungsrohres 1 angeschlossen (wobei eine elektrische Isolierung zu dem übrigen Leitungssystem vorgesehen ist).

Zur automatischen Steuerung der Einrichtung ist eine - in der Zeichnung nicht dargestellte - Steuerungseinheit vorgesehen, die mit dem Sechs-Wege-Ventil, den Magnetventilen, dem Temperaturfühler, der elektrischen Spannungsquelle und dem Vakuumanzeiger in Verbindung steht.

Vor Beginn der Anreicherung der Spurenstoffe sind alle Magnetventile MV 1 bis MV 4 geschlossen. Das Sechs-Wege-Ventil S ist so eingestellt, daß das Anreicherungsrohr 1 an das Vakuumgefäß 10 bzw. an die das Gas führende Leitung angeschlossen ist. Das Magnetventil MV 2 wird als erstes geöffnet und der Vakuumbehälter, dessen Volumen bekannt sein muß, evakuiert. Nach Erreichen des Endvakuums (im Millibar- Bereich) wird das Magnetventil MV 4 geöffnet. Der flüssige Stickstoff kann jetzt in die Kühlkammer 2 eintreten und das Anreicherungsrohr 1 auf die Temperatur des flüssigen Stickstoffes abkühlen.

Nun werden das Magnetventil MV 2 zur Pumpe geschlossen und MV 1 und MV 3 geöffnet. An dem am Analogausgang des Vakuumanzeigegerätes angeschlossenen Komparator wird die zu sammelnde Luftmenge eingestellt, wobei sich die Probenmenge aus dem Produkt des absoluten Druckes und dem Volumen des Vakuumbehälters errechnet. Bei Erreichen des eingestellten Wertes schließt das Probeneinlaßventil MV 3.

Dieses Magnetventil schließt ebenfalls automatisch bei einer oberen Schwelle von 0,5 bar absolut um das Einkondensieren von Luft in das Probenrohr zu verhindern, denn der Partialdruck von Luft beträgt bei der Temperatur des flüssigen Stickstoffs ungefähr die Hälfte des Atmosphärendruckes. Bei Anreicherung von Spurenstoffen aus anderen Gasen wird diese Schwelle entsprechend dem Partialdruck des jeweiligen Gases bei der Temperatur des flüssigen Stickstoffs eingestellt.

Die Injektion der angereicherten Probe in den Trägergasstrom des Gaschromatographen wird durch Schließen der Magnetventile MV 1 und MV 4 eingeleitet. MV 1 trennt das Probenanreicherungsrohr vom Vakuumbehälter, während das Schließen von MV 4 das Entgasen der Kammer verhindert.

Für die Desorption der Spurengase wird das Anreicherungsrohr 1 dann durch die geregelte direkte Widerstandsheizung aufgeheizt (400 A, 10 V), wobei das Rohr 1 selbst den Widerstand darstellt.

Durch den dabei verdampfenden flüssigen Stickstoff wird den restliche flüssige Stickstoff aus der Kammer herausgedrängt. Es reichen wenige Mikroliter flüssiger Stickstoff, da 1 ml flüssiger Stickstoff etwa 700 ml Gas ergibt. In diesem Gasraum kann sich das Rohr aufheizen. Die Endtemperatur von 160 Grad Celsius wird über das auf das untere Ende des Anreicherungsrohres angelötete Thermoelement eingeregelt.

Durch Drehen des Sechs-Wege-Ventils S um 60 Grad werden nun die adsorbierten Spurenstoffe in den Trägergasstrom des Gaschromatographen gebracht. Nachdem die Dosierung erfolgt ist, wird das Sechs-Wege-Ventil zurückgestellt. Alle Ventile sind jetzt wieder im Anfangszustand: Es kann erneut angereichert werden.

Der Stand des flüssigen Stickstoffes in der 1-Kanne wird zweckmäßigerweise über einen Füllstandsanzeiger kontrolliert und bei Erreichen eines unteren Pegels automatisch nachgefüllt.

Die beschriebene Betriebsweise der Vorrichtung bzw. Einrichtung zeigt, daß alle mechanischen Bewegungen, wie Heben und Senken eines Kühlmittelbehälters, vermieden werden.

**Ansprüche**

1. Vorrichtung zur kryogenen Anreicherung von in Gasen enthaltenen Spurenstoffen, bei der eine U-förmig gebogenes, in der Regel ein Adsorbens enthaltendes Rohr vorgesehen ist, durch das das Gas hindurchgeleitet wird und das zur Anreicherung der Spurenstoffe in ein ein Kühlmittel enthaltendes Gefäß eingetaucht ist, wobei die aus dem Kühlmittelgefäß oben herausragenden Rohrenden an die das Gas führende Leitung angeschlossen sind, dadurch gekennzeichnet, daß zumindest der gegebenenfalls für die Aufnahme des Adsorbens bestimmte Teil des Rohres von einer Kammer (2) umfaßt, wird, die nahe der oder an der dem Boden des Kühlmittelgefäßes (12) zugewandten Seite eine Öffnung (7) aufweist und in die von oben ein außerhalb des Kühlmittelgefäßes verschließbares, unten offenes Entgasungsrohr (3) hineinragt, dessen Mündung sich oberhalb der Öffnung in vorgegebenem Abstand von dieser befindet und daß eine Einrichtung zur Aufheizung des im Kühlmittelgefäß verbleibenden, das Adsorbens enthaltenden Rohres (1) vorgesehen ist.

2. Vorrichtung nach Anspruch 1, dadurch gekennzeichnet, daß das Rohr (1) aus einem elektrisch leitenden Material besteht, und zu seiner Aufheizung an eine elektrische Spannungsquelle anschließbar ist.

3. Vorrichtung nach Anspruch 1 oder 2, dadurch gekennzeichnet, daß sich an dem das Adsorbens enthaltenden Teil des Rohres (1) ein elektrischer Temperaturmeßfühler (4) befindet, dessen Zuleitungen zu den aus dem Kühlmittelgefäß (9) herausragenden Rohrenden geführt sind.

4. Vorrichtung nach einem der Ansprüche 1 bis 3, dadurch gekennzeichnet, daß ein aus wenigstens zwei Kammern (2) bestehendes Kammersystem mit jeweils einem U-förmig gebogenen Rohr (1), einem in die Kammer hineinragenden Entgasungsrohr (3) und jeweiliger Temperaturmeßstelle (4) vorgesehen sind.

5. Einrichtung mit einer Vorrichtung gemäß einem der Ansprüche 1 bis 4,

**dadurch gekennzeichnet,** daß ein Rohrende des U-förmig gebogenen Rohres (1) mit einer Einrichtung (10, 11, 12) zur Volumenbestimmung des durch das U-förmige Rohr (1) geleiteten Gases und das andere Rohrende mit der das eingeleitete Gas enthaltenden Leitung und alternativ eines der beiden Rohrenden des U-förmig gebogenen Rohres (1) mit einem Anschluß für ein Trägergas und das andere Rohrende mit einer Einrichtung zur Bestimmung der Spurenstoffe verbindbar sind, wobei die Verbindungsleitungen durch Ventile (S, MV1 bis MV3) verschließbar sind.

6. Einrichtung nach Anspruch 5,

**dadurch gekennzeichnet,** daß die Einrichtung zur Volumenbestimmung des Gases aus einem mit einer Vakuumpumpe (11) in Verbindung stehenden Vakuumbehälter (10) besteht.

7. Einrichtung nach Anspruch 6,

**dadurch gekennzeichnet,** daß an dem Vakuumbehälter (10) ein Vakuumanzeiger (12) angeschlossen ist.

FIG. 1

FIG. 2a

FIG. 2b

FIG. 3